(19) Europäisches Patentamt
European Patent Office
Office européen des brevets

(11) Veröffentlichungsnummer : **0 049 222**
**B1**

(12) # EUROPÄISCHE PATENTSCHRIFT

(45) Veröffentlichungstag der Patentschrift : **13.06.84**

(51) Int. Cl.³ : **C 07 F 9/165**, C 07 F 9/65, C 10 M 1/48

(21) Anmeldenummer : **81810389.7**

(22) Anmeldetag : **23.09.81**

(54) **Dithiophosphate, Verfahren zu deren Herstellung und ihre Verwendung als Schmiermitteladditive.**

(30) Priorität : **29.09.80 CH 7277/80**

(43) Veröffentlichungstag der Anmeldung : **07.04.82 Patentblatt 82/14**

(45) Bekanntmachung des Hinweises auf die Patenterteilung : **13.06.84 Patentblatt 84/24**

(84) Benannte Vertragsstaaten : **BE DE FR GB IT NL**

(56) Entgegenhaltungen :
**EP-A- 0 027 776**
**DE-A- 2 802 756**
**GB-A- 1 094 284**
**US-A- 3 254 027**

(73) Patentinhaber : **CIBA-GEIGY AG**
**Postfach**
**CH-4002 Basel (CH)**

(72) Erfinder : **Michaelis, Klaus-Peter, Dr.**
**Am Hangweg 8**
**D-6145 Lindenfels/Odenwald (DE)**
Erfinder : **Schneider, Rainer, Dr.**
**Am Markstein 4**
**D-6144 Zwingenberg (DE)**

**EP 0 049 222 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft neue Dithiophosphate, ihre Herstellung und ihre Verwendung in Schmierölen.

Es sind bereits Dithiophosphate und deren Verwendung als Schmiermittelzusätze beschrieben, bei deren Herstellung ein Monoepoxid durch Additionsreaktion in das Molekül des Additives eingebaut wird. Derartige Produkte sind beispielsweise in der DE-OS 2 802 756 beschrieben.

Gegenstand der Erfindung sind Verbindungen der Formel I

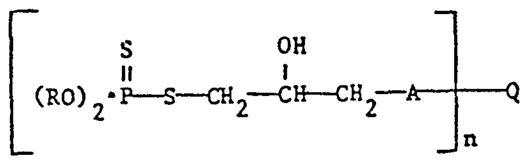 (I)

worin n die Zahl 2, 3 oder 4 darstellt und die Wertigkeit von Q bedeutet, R ununterbrochenes oder durch O- oder S-Atome unterbrochenes lineares oder verzweigtes $C_1$-$C_{18}$ Alkyl, unsubstituiertes oder durch 1 oder 2 $C_1$-$C_{12}$ Alkyl substituiertes $C_5$-$C_8$ Cycloalkyl, unsubstituiertes oder durch 1 oder 2 $C_1$-$C_{18}$ Alkyl substituiertes Phenyl oder Benzyl ist, A eine Gruppe —O · CO—, —O— oder —[OCH($R^1$)$CH_2$]—$_m$, worin m eine Zahl zwischen 0 und 30 und $R^1$ Wasserstoff oder Methyl bedeuten, ist, wobei, wenn A —O · COist, Q eine der Gruppen

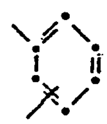 , 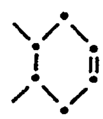 oder 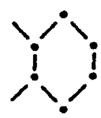

ist, wenn A —O— bedeutet, Q eine der Gruppen

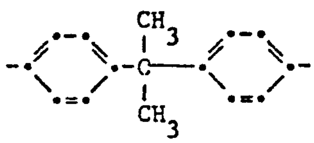 , 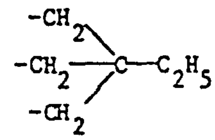 , 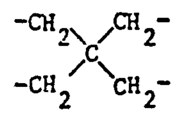

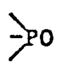 oder 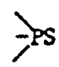

ist und, wenn A eine Gruppe —[OCH($R^1$)$CH_2$]—$_m$ ist,

Q für eine heterocyclische Gruppe (E) aus der Reihe Hydantoin-, Uracil-, Dihydrouracil-, Barbitursäure- und Aethylenharnstoff-Rest steht, wobei die Gruppen (E) auch substituiert sein können und wobei A und Q über N-Heteroatome verbunden sind.

R ist als Cycloalkyl bevorzugt Cyclohexyl. Es ist als Cycloalkyl, Phenyl oder Benzyl bevorzugt mit 1 oder 2 Alkylgruppen substituiert.

Beispiele für R sind :

Methyl, Aethyl, Propyl, Butyl, i-Butyl, t-Butyl, Pentyl, Hexyl, 2-Methylpentyl, Heptyl, Octyl, 2-Aethylhexyl, Nonyl, i-Nonyl, Decyl, Undecyl, Dodecyl, 2-Aethyldecyl, t-Dodecyl, Tetradecyl, Octadecyl, i-Octadecyl, Methoxyäthyl, Methoxy-n-propyl, Octoxyäthyl, Octylthioäthyl, Cyclopentyl, Methylcyclopentyl, Methylcyclohexyl, p-Nonylcyclohexyl, Methylphenyl, Aethylphenyl, t-Butylphenyl, Dimethylphenyl, Hexylphenyl, i-Octylphenyl, Nonylphenyl, Dinonylphenyl, Dodecylphenyl, Methylbenzyl, Nonylbenzyl, Dodecylbenzyl.

R kann auch Reste von technischen Alkoholen bzw. Alkoholgemischen darstellen. Diese Alkohole werden im allgemeinen nach dem Zieglerverfahren aus Aluminium, Wasserstoff und Aethylen und nachfolgender Hydroxylierung hergestellt und stellen meist Gemische verschiedener verzweigter Alkohole dar. Diese Alkohole sind kommerziell erhältlich, z. B. Guerbetalkohole® und Alfole® (Hersteller : Condea), Dobanole® (Hersteller : Shell) und Oxanole® (Hersteller : Ruhrchemie).

Bevorzugt bedeutet R in Formel I $C_3$-$C_8$-Alkyl, insbesondere i-Propyl oder i-Octyl.

Der Umfang der Gruppen Q in Formel I ergibt sich nachstehend in einfacher Weise aus der Diskussion über die bei der Herstellung verwendeten Polyepoxidverbindungen, sodass sich an dieser Stelle ein weiteres Eingehen auf Q erübrigt.

Eine bevorzugte Verbindung der Formel I ist eine solche der folgenden Struktur :

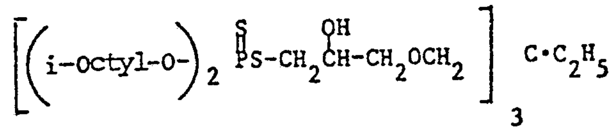

i-Octyl bedeutet jeweils 2-Aethylhexyl.

Weiterer Gegenstand der Erfindung ist ein Verfahren zur Herstellung von Verbindungen der Formel I, welches dadurch gekennzeichnet ist, dass man einen Dithiophosphorsäure-O,O-dialkylester der Formel II

$$(RO)_2\overset{\overset{\displaystyle S}{\|}}{P}\text{-}SH \qquad \text{(II)}$$

und eine Epoxyverbindung der Formel III

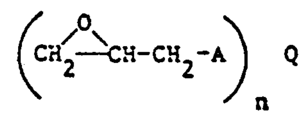

(III)

gegebenenfalls in einem inerten organischen Lösungsmittel, in einem solchen Mengenverhältnis einer Additionsreaktion bei 50° bis 100 °C unterwirft, dass auf 1 Mol der Verbindung der Formel III n Mole der Verbindung der Formel II kommen, und dass man gegebenenfalls danach das Lösungsmittel entfernt.

Bevorzugt wird die Additionsreaktion in einem inerten organischen Lösungsmittel durchgeführt.

Die Dithiophosphorsäureester der Formel II sind bekannte Substanzen und können in einfacher Weise durch Reaktion von $P_2S_5$ mit entsprechenden Alkoholen ROH hergestellt werden (siehe z. B. DT-OS 2 802 756).

Als Epoxidverbindungen der Formel III kommen u. a. ätherartige Epoxidharze, welche durch Reaktion von Epichlorhydrin mit Alkoholen, wie z. B. Trismethylolpropan und Pentaerythrit, oder mit Phenolen, wie Bisphenol-A, Bisphenol-F, Diphenol oder mit den entsprechenden am Kern hydrierten Phenolen hergestellt werden, in Frage.

Als Epoxidverbindungen der Formel III mit Estercharakter, welche also als A die Gruppe —O · COenthalten, kommen die Diglycidylverbindungen der Phthalsäuren und der Tetra- und Hexahydro-o-phthalsäure in Frage. Zu den Epoxidverbindungen der Formel III mit Estercharakter zählt auch das Triglycidylphosphat. Diese bekannte Substanz wird z. B. in CA, Vol 83 (1975) 99 121 p, US-Patent 2 856 369, US-Patent 2 826 592 und in Plaste Kautschuk (9)11 (1964) 515 (A. Wende et al.) erwähnt.

Im Falle der Herstellung der Produkte der Formel I, wobei

$$A = (O\cdot\overset{\overset{\displaystyle R^1}{|}}{C}H\cdot CH_2)_m\text{-}$$

bedeutet, werden als Epoxidverbindungen der Formel III insbesondere die bekannten Substanzen eingesetzt, welche eine oder zwei heterocyclische Gruppen (E) aus der Reihe Hydantoin-, Uracil-, Dihydrouracyl-, Barbitursäure- und Aethylen-harnstoff-Rest enthalten. Diesbezüglich ist auf die folgenden US-Patentschriften hinzuweisen: US 3,429,833, US 3,449,353, US 3,592,823, US 3,542,803, US 3,503,979, US 3,496,180, US 3,562,275, US 3,562,274, US 3,772,326, US 3,629,263, US 3,161,594, US 3,631,221, US 3,679,681, US 4,038,277, US 3,821,243, US 3,907,719, US 3,975,397.

All diese Epoxidverbindungen sind statistische Gemische von monomeren und oligomeren Verbindungen.

Die Verbindungen der Formel I können in den Fällen, wo A für —O · CO— oder —O— steht, auch auf folgende Weise hergestellt werden. Ein Dithiophosphorsäure-O,O-dialkylester der Formel II wird mit Glycidol umgesetzt. Das erhaltene Additionsprodukt, welches eine endständige und eine seitenständige OH-Gruppe an der entstandenen Propylengruppe enthält, wird anschliessend mit einem Säurederivat, wie Halogenid, Anhydrid und Ester, zur Kondensationsreaktion gebracht. Die Menge des Säurederivates wird so gewählt, dass praktisch nur die aktivierte endständige OH-Gruppe zur Reaktion gelangt.

Weiterer Gegenstand der Erfindung ist auch ein durch Additionsreaktion eines Dithiophosphorsäure-O,O-dialkylesters, vorzugsweise Dithiophosphorsäure-O,O-di-2-äthylhexylester, mit einem epoxidierten Sojabohnenöl bei 50° bis 100 °C erhaltenes Produkt und die Herstellung dieses Produkts.

Letztere erfolgt, indem man einen Dithiophosphorsäure-O,O-dialkylester in einem solchen Mengenverhältnis mit einem epoxidierten Sojabohnenöl gegebenenfalls in einem inerten organischen Lösungsmittel einer Additionsreaktion unterwirft, dass die —SH-Gruppen und die Epoxidgruppen in stöchiometrischen Mengen vorliegen, wobei die Reaktionstemperatur 50° bis 100 °C beträgt.

Die erfindungsgemässen Verbindungen der Formel I und die erfindungsgemässen durch Additionsreaktion entstandenen, P enthaltenden Produkte auf der Basis von epoxidiertem Sojabohnenöl wirken schon in sehr geringen Mengen als Hochdruck-Zusätze in Schmiermitteln. So zeigen mineralische und synthetische Schmieröle, sowie deren Gemische, welche mit 0,01 bis 5 Gew.-%, bezogen auf das Schmiermittel, und vorzugsweise 0,05 bis 3 % einer dieser erfindungsgemässen Verbindungen ausgestattet sind, ausgezeichnete Hochdruck-Schmiereigenschaften, welche durch stark reduzierte Abnutzungserscheinungen der zu schmierenden Teile deutlich werden (EP/AW-Additiv). Die in Frage kommenden Schmiermittel sind dem Fachmann geläufig und z. B. im « Schmiermittel Taschenbuch » (Hüthig Verlag, Heidelberg, 1974) beschrieben.

Weiterer Gegenstand der Erfindung sind somit auch Stoffzusammensetzungen bestehend aus einem mineralischen und/oder synthetischen Schmieröl und einer Verbindung der Formel I gemäss Anspruch 1 oder mehreren solcher Verbindungen und die Verwendung der Verbindungen der Formel I als Schmiermitteladditive.

Ebenfalls sind weiterer Gegenstand der Erfindung Stoffzusammensetzungen bestehend aus einem mineralischen und/oder synthetischen Schmieröl und einem erfindungsgemässen durch Additionsreaktion eines Dithiophosphorsäure-O,O-dialkylesters mit einem epoxidierten Sojabohnenöl bei 50° bis 100 °C erhaltenen Produkt sowie die Verwendung dieses Additionsproduktes als Schmiermitteladditive.

Das Schmieröl kann zusätzlich andere Additive enthalten, die zugegeben werden, um die Eigenschaften zu verbessern, wie Antioxidantien, Metallpassivatoren, Rostinhibitoren, Viscositätsindex-Verbesserer/Fliesspunktserniedriger, Dispergiermittel/Detergentien und andere Extrem-Druck/Antiabnutzungs-Additive.

Beispiele für Antioxidantien sind :

(a) Alkylierte und nicht-alkylierte aromatische Amine und Mischungen davon, z. B. : Dioctylphenylamin, Mono-t-octylphenyl-α- und -β-naphthylamine, Phenothiazin, Dioctylphenothiazin, Phenyl-α-naphthylamin, N,N'-Di-sec-butyl-p-phenyldiamin.

(b) Gehinderte Phenole, z. B. 2,6-Di-tert-butyl-p-cresol, 4,4'-Bis-(2,6-diisopropylphenyl), 2,4,6-Triisopropylphenol, 2,2'-Thio-bis-(4-methyl-6-tert-butyl-phenol), 4,4'-Methylen-bis-(2,6-di-t-butyl-phenol).

(c) Alkyl-, Aryl- oder Alkaryl-phosphite, z. B. : Trinonylphosphit, Triphenylphosphit, Diphenyldecylphosphit.

(d) Ester von Thiodipropionsäure oder Thiodiessigsäure, z. B. : Dilaurylthiodipropionat oder Dioctylthiodiacetat.

(e) Salze von Carbamin- und Dithiophosphorsäuren z. B. : Antimondiamyldithiocarbamat, Zink-Diamyldithiophosphat.

(f) Metallsalze und Metallkomplexe von organischen Chelatbildnern, z. B. : Kupfer-bis-trifluoracetylacetonat, Kupfer-phthalocyanine, Tributyl-ester von Aethylendiamin-tetra-essigsäuremono-natriumsalz.

(g) Frei-Radikal-Antioxidantien, z. B. : Nitroxide.

(h) Kombinationen von zwei oder mehr Antioxidantien der obigen, z. B. : ein alkyliertes Amin und ein gehindertes Phenol.

Beispiele für Metallpassivatoren sind :

(a) für Kupfer, z. B. : 1,2,4-Triazole, Benzotriazol, Tetrahydrobenzotriazol, 2,5-Dimercaptothiadiazol, Salicyliden-propylendiamin, Salze von Salicylaminoguanidin,

(b) für Magnesium, z. B. : Pyridylamine,

(c) für Blei, z. B. : Sebacinsäure, Chinizarin, Propyl-gallat,

(d) Kombination von zwei oder mehr der obigen Additive.

Beispiele für Rost-Inhibitoren sind :

(a) Organische Säuren, ihre Ester, Metallsalze und Anhydride sind z. B. : N-Oleoyl-sarcosin, Sorbitanmono-oleat, Bleinaphthenat, Dodecenylbernsteinsäure-anhydrid.

(b) Stickstoffhaltige Verbindungen, z. B. :

I. Primäre, sekundäre oder tertiäre aliphatische oder cycloaliphatische Amine und Amin-Salze von organischen und anorganischen Säuren, z. B. öllösliche Alkylammoniumcarboxylate.

II. Heterocyclische Verbindungen, z. B. : Imidazoline, Oxazoline.

(c) Phosphorhaltige Verbindungen, z. B. : Aminsalze von Phosphorsäurepartialestern,

(d) Schwefelhaltige Verbindungen, z. B. : Barium-dinonylnaphthalinsulfonate, Calciumpetrolensulfonate,

(e) Kombinationen von zwei oder mehr der obigen Additive.

Beispiele für Viscositäts-Index-Verbesserer/Fliesspunktserniedriger sind z. B. : Polymethacrylate, Polybutene, Olefin-Copolymere, Polyvinylpyrrolidon oder Polymethacrylat-Copolymere.

Beispiele für Dispergiermittel/Detergentien sind z. B. : Metallsulfonate (Ca, Ba, Mg) und -phenate, Polybutenyl-succinimide.

Beispiele für Extremdruck/Antiabnutzungs-Additive sind : Schwefel und/oder Phosphor und/oder Halogen enthaltendes Material, z. B. : Zink-dialkyl-phosphordithioate, Tritolyl-phosphat, chloriertes Paraffin.

Die erfindungsgemässen Verbindungen der Formel I und die erfindungsgemässen durch Additionsreaktion entstandenen, P enthaltenden Produkte auf der Basis von epoxidiertem Sojabohnenöl finden auch Verwendung als Akarizide und Insektizide.

Die folgenden Beispiele dienen zur Erläuterung der Erfindung.

Es ist davon auszugehen, dass es sich bei den Reaktionsprodukten der nachfolgenden Beispiele um statistische Gemische von monomeren und oligomeren Verbindungen handelt. Die Zusammensetzung der Gemische wird wesentlich bestimmt durch die Reaktionsbedingungen und die Mischungsverhältnisse der Reaktanden. Es sind hellbraune, zähflüssige Produkte, die praktisch in quantitativer Ausbeute

erhalten werden. In allen Beispielen ist die Reaktion offensichtlich vollständig abgelaufen, da der SH- und Epoxidgehalt praktisch null sind. Die Substanzen werden in allen Fällen als O,O-Dialkyl-S-alkyl-dithiophosphate durch Phosphor-NMR identifiziert.

Beispiel 1 :

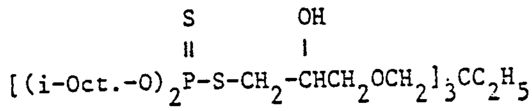

Eine Lösung von 141,6 g (73 % an SH) Dithiophosphorsäure-O,O-di-2-ethylhexylester in 200 ml Toluol wird bei 60 °C unter Rühren im Verlauf von 1,5 Stunden mit 39,2 g einer Epoxyverbindung der Formel

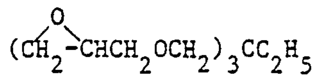

versetzt und anschliessend 2 Stunden bei 80-90 °C gerührt. Aus dem erhaltenen Additionsprodukt wird das Lösungsmittel im Vakuum abdestilliert.

$n_D^{20}$ : 1,499 1

Beispiel 2 :

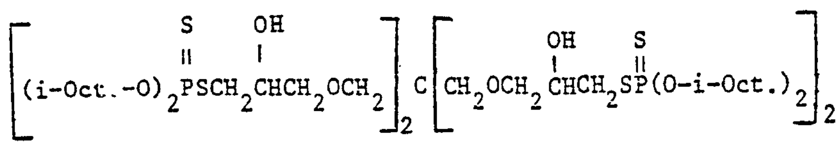

Eine Lösung von 70,8 g (75 % an SH) Dithiophosphorsäure-O,O-di-2-äthylhexylester in 100 ml Toluol wird bei 60 °C unter Rühren im Verlauf von 1 Stunde mit 20 g einer Epoxyverbindung der Formel

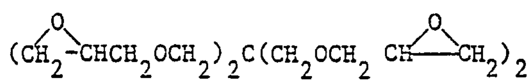

versetzt und anschliessend 2 Stunden bei 80-90 °C gerührt. Aus dem erhaltenen Additionsprodukt wird nach Bestimmung des SH- und Epoxid-Gehaltes das Lösungsmittel im Vakuum abdestilliert.

$n_D^{20}$ : 1,498 9

Beispiel 3 :

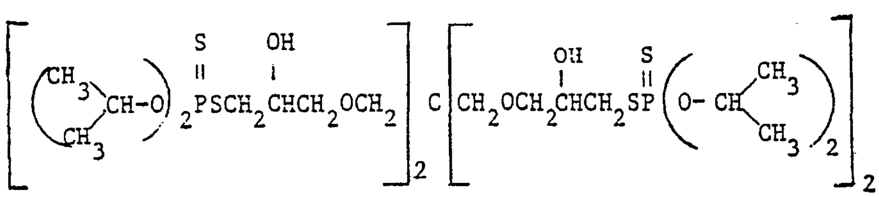

Eine Lösung von 46,3 g (0,2 Mol) Ammonium-dithiophosphorsäure-O,O-diisopropylester in 100 ml Toluol wird bei 60 °C unter Rühren im Verlauf von 1 Stunde mit 40 g einer Epoxidverbindung der Formel

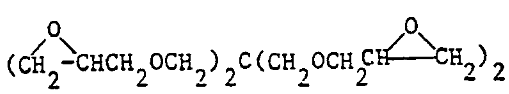

versetzt und anschliessend 2 Stunden bei 80-90 °C gerührt. Aus dem erhaltenen Additionsprodukt wird nach Bestimmung des SH- und Epoxid-Gehaltes das Lösungsmittel im Vakuum abdestilliert. Das erhaltene Produkt ist so zähflüssig, dass die Bestimmung des Brechungsindex nicht möglich ist.

Beispiel 4 :

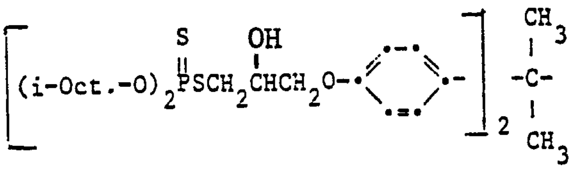

Eine Lösung von 66,4 g (80 % an SH) Dithiophosphorsäure-O,O-di-2-äthylhexylester in 100 ml Toluol wird bei 60 °C unter Rühren im Verlauf von 1 Stunde mit 25,5 g einer Epoxidverbindung der Formel

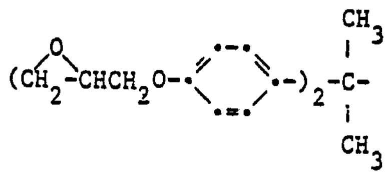

versetzt und anschliessend 2 Stunden bei 80-90 °C gerührt. Aus dem erhaltenen Additionsprodukt wird nach Bestimmung des SH- und Epoxid-Gehaltes das Lösungsmittel im Vakuum abdestilliert.

$n_D^{20}$ : 1,522 8

Beispiel 5 :

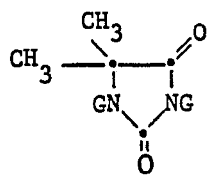

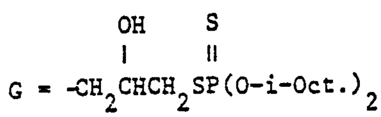

Eine Lösung von 66,4 g (80 % an SH) Dithiophosphorsäure-O,O-di-2-äthylhexylester in 100 ml Toluol wird bei 60 °C unter Rühren im Verlauf von ca. 1 Stunde mit 18 g einer Epoxidverbindung der Formel

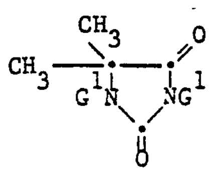

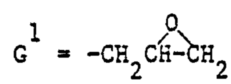

versetzt und anschliessend 0,5 Stunden bei 80-90 °C gerührt. Aus dem erhaltenen Additionsprodukt wird nach Bestimmung des SH- und Epoxid-Gehaltes das Lösungsmittel im Vakuum abdestilliert.

Die erhaltene Substanz ist sehr zähflüssig. Die Bestimmung von $n_D^{20}$ ist nicht möglich.

Beispiel 6 :

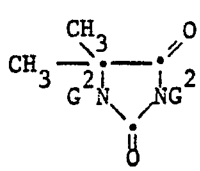

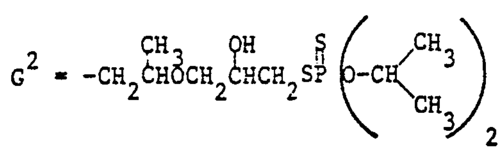

Eine Lösung von 46,6 g (0,2 Mol) Ammonium-dithiophosphorsäure-O,O-diisopropylester in 100 ml Toluol wird bei 60 °C unter Rühren im Verlauf von 1 Stunde mit 53,4 g einer Epoxidverbindung der Formel

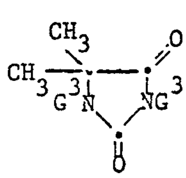

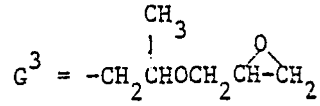

versetzt und anschliessend 2 Stunden bei 80-90 °C gerührt. Aus dem erhaltenen Additionsprodukt wird

nach Bestimmung des SH- und Epoxid-Gehaltes das Lösungsmittel im Vakuum abdestilliert.

$n_D^{20}$ : 1,512 4

Beispiel 7 :

Umsetzungsprodukt von Dithiophosphorsäure-O,O-di-2-ethylhexylester/epox. Sojabohnenöl.

Eine Lösung von 35,4 g (0,1 Mol) Dithiophosphorsäure-O,O-di-2-äthylhexylester in 100 ml Toluol wird bei 60 °C unter Rühren im Verlauf von 1 Stunde mit 26,3 g epoxidiertem Sojabohnenöl versetzt und anschliessend 1 Stunde bei 80-90 °C gerührt. Aus dem erhaltenen Additionsprodukt wird nach Bestimmung des SH- und Epoxid-Gehaltes das Lösungsmittel im Vakuum abdestilliert.

$n_D^{20}$ : 1,496 0

Beispiel 8 :

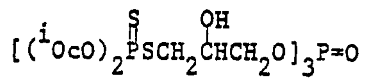

Eine Lösung von 147,7 g (73 % an SH) Dithiophosphorsäure-O,O-di-2-äthylhexylester in 500 ml Toluol wurde bei 60 °C unter Rühren im Verlaufe von 1 Stunde mit 31,9 g

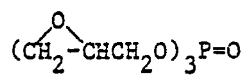

versetzt und anschliessend 2 Stunden bei 80-90 °C gerührt. Aus dem erhaltenen Additionsprodukt wurde nach Bestimmung des SH- und Epoxid-Gehaltes das Lösungsmittel im Vakuum abdestilliert.

$n_D^{20}$ : 1,499 2

Anwendungsbeispiele

Mit dem Shell-Vierkugel-Apparat werden nach DIN 51 350 folgende Werte bestimmt : (Tentative method IP 239/69, Extreme pressure and wear lubricant test for oils and greases, four ball-machine).

1) I.S.L. = Initial Seizure Load : Das ist die Last, bei der der Oelfilm innerhalb einer Belastungsdauer von 10 Sekunden zusammenbricht.

2) W.L. = Weld Load (Schweisslast). Das ist die Last, bei der die 4 Kugeln innerhalb von 10 Sekunden zusammenschweissen.

3) W.S.D. = Wear Scar Diameter im mm : Das ist der mittlere Verschleissdurchmesser bei einer Belastung von 70 kg bzw. 40 kg während 1 Stunde.

Als Basisöl wird ein nicht legiertes mineralisches Schmieröl verwendet.

Die Ergebnisse dieser Versuche sind in der Tabelle zusammengestellt. Die die erfindungsgemässen Verbindungen enthaltenden Oelmischungen zeichnen sich aus durch gute EP- und AW-Eigenschaften (ISL, WL, WSD). Sie sind hydrolysestabil und verursachen keine Fe-Korrosion.

Die Flüchtigkeit der erfindungsgemässen Verbindungen aus den Oelmischungen ist gering.

| Schmiermittelzusatz | | ISL | WL | WSD |
|---|---|---|---|---|
| Typ | Konz. in Gew.-% | (kg) | (kg) | (kg) |
| gem. Beispiel 1 | 1 | 110 | 200 | 0,4 |
| gem. Beispiel 2 | 1 | 90 | 210 | 0,4 |
| gem. Beispiel 3 | 1 | 100 | 210 | 0,4 |
| gem. Beispiel 4 | 1 | 90 | 200 | o,4 |

(Fortsetzung)

| Schmiermittelzusatz | | ISL | WL | WSD |
|---|---|---|---|---|
| Typ | Konz. in Gew.-% | (kg) | (kg) | (kg) |
| gem. Beispiel 5 | 1 | 110 | 230 | 0,4 |
| gem. Beispiel 6 | 1 | 80 | 220 | 0,4 |
| gem. Beispiel 7 | 1 | 80 | 210 | 0,5 |

**Ansprüche**

1. Verbindungen der Formel I

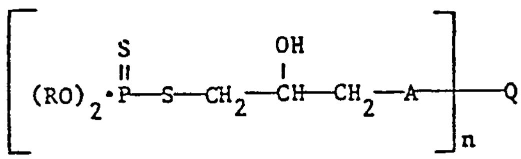

worin n die Zahl 2, 3 oder 4 darstellt und die Wertigkeit von Q bedeutet, R ununterbrochenes oder durch O- oder S-Atome unterbrochenes lineares oder verzweigtes $C_1$-$C_{18}$ Alkyl, unsubstituiertes oder durch 1 oder 2 $C_1$-$C_{12}$ Alkyl substituiertes $C_5$-$C_8$ Cycloalkyl, unsubstituiertes oder durch 1 oder 2 $C_1$-$C_{18}$ Alkyl substituiertes Phenyl oder Benzyl ist, A eine Gruppe —O · CO—, —O— oder —[OCH($R^1$)$CH_2$]—$_m$, worin m eine Zahl zwischen 0 und 30 und $R^1$ Wasserstoff oder Methyl bedeuten, ist, wobei, wenn A —O · COist, Q eine der Gruppen

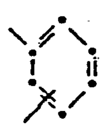 , 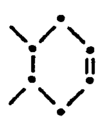 oder 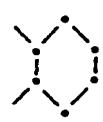

ist, wenn A —O— bedeutet, Q eine der Gruppen

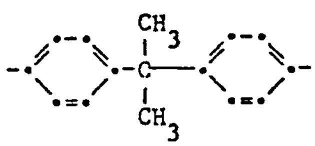 , 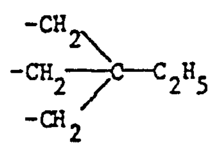 , 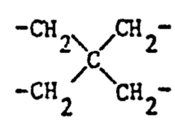

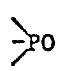 oder 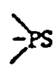

ist und, wenn A eine Gruppe —[OCH($R^1$)$CH_2$]—$_m$ ist,

Q für eine heterocyclische Gruppe (E) aus der Reihe Hydantoin-, Uracil-, Dihydrouracil-, Barbitursäure- und Aethylenharnstoff-Rest steht, wobei die Gruppen (E) auch substituiert sein können und wobei A und Q über N-Heteroatome verbunden sind.

2. Verbindungen nach Anspruch 1 der Formel I, in der R $C_3$-$C_8$-Alkyl, insbesondere i-Propyl oder i-Octyl, bedeutet.

3. Verbindung nach Anspruch 1 der Formel I, dadurch gekennzeichnet, dass sie die folgende Struktur aufweist:

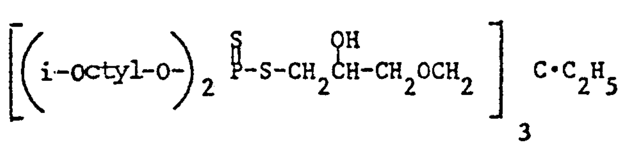

4. Durch Additionsreaktion eines Dithiophosphorsäure-O,O-dialkylesters mit einem epoxidierten Sojabohnenöl bei 50° bis 100 °C erhaltenes Produkt.

5. Produkt gemäss Anspruch 4, dadurch gekennzeichnet, dass es sich bei dem Dithiophosphorsäure-O,O-dialkylester um den Dithiophosphorsäure-O,O-di-2-äthylhexylester handelt.

6. Verfahren zur Herstellung von Verbindungen nach Anspruch 1 der Formel I, dadurch gekennzeichnet, dass man einen Dithiophosphorsäure-O,O-dialkylester der Formel II

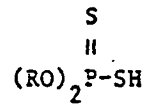

(II)

und eine Epoxyverbindung der Formel III

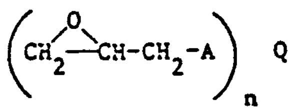

(III)

gegebenenfalls in einem inerten organischen Lösungsmittel, in einem solchen Mengenverhältnis einer Additionsreaktion bei 50° bis 100 °C unterwirft, dass auf 1 Mol der Verbindung der Formel III n Mole der Verbindung der Formel II kommen, und dass man gegebenenfalls danach das Lösungsmittel entfernt.

7. Verfahren nach Anspruch 6, dadurch gekennzeichnet, dass man die Additionsreaktion in einem inerten organischen Lösungsmittel ablaufen lässt.

8. Verfahren zur Herstellung von Verbindungen nach Anspruch 4, dadurch gekennzeichnet, dass man einen Dithiophosphorsäure-O,O-dialkylester in einem solchen Mengenverhältnis mit einem epoxidierten Sojabohnenöl gegebenenfalls in einem inerten organischen Lösungsmittel einer Additionsreaktion unterwirft, dass die —SH-Gruppen und die Epoxidgruppen in stöchiometrischen Mengen vorliegen, wobei die Reaktionstemperatur 50° bis 100 °C beträgt.

9. Stoffzusammensetzungen bestehend aus einem mineralischen und/oder synthetischen Schmieröl und einer Verbindung der Formel I gemäss Anspruch 1 oder mehreren solcher Verbindungen.

10. Verwendung der Verbindungen der Formel I gemäss Anspruch 1 als Schmiermitteladditive.

11. Stoffzusammensetzungen bestehend aus einem mineralischen und/oder synthetischen Schmieröl und einem Produkt gemäss Anspruch 4.

12. Verwendung des Produktes gemäss Anspruch 4 als Schmiermitteladditiv.

## Claims

1. Compounds of the formula I

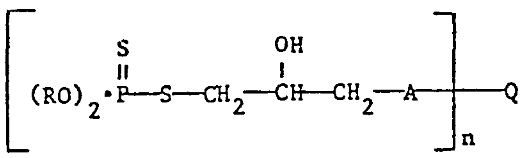

(I)

wherein n is the number 2, 3 or 4 and is the valency of Q, R is straight-chain or branched-chain $C_1$-$C_{18}$-alkyl uninterrupted or interrupted by O or S atoms, $C_5$-$C_8$-cycloalkyl unsubstituted or substituted by 1 or 2 $C_1$-$C_{12}$-alkyl groups, or phenyl or benzyl unsubstituted or substituted by 1 or 2 $C_1$-$C_{18}$-alkyl groups, A is a group —O · CO—, —O— or —$[OCH(R^1)CH_2]$—$_m$, in which m is a number between 0 and 30 and $R^1$ is hydrogen or methyl, and wherein, when A is —O · CO—, Q is one of the groups

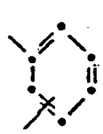 , 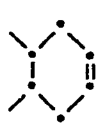 or 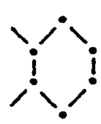

when A is —O—, Q is one of the groups

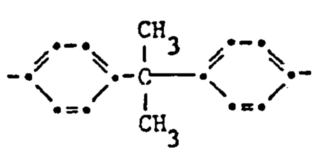 , 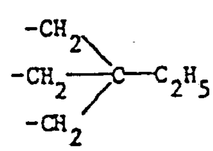 , 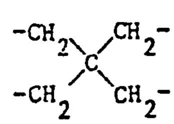

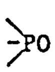 or 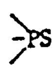

and, when A is a group —[OCH($R^1$)$CH_2$]—$_m$, Q is a heterocyclic group (E) from the series comprising the hydantoin, uracil, dihydrouracil, barbituric acid and ethyleneurea radical, the groups (E) being unsubstituted or substituted, and the bonding between A and Q being via N-hetero atoms.

2. Compounds according to claim 1 of the formula I in which R is $C_3$-$C_8$-alkyl, especially i-propyl or i-octyl.

3. Compound according to claim 1 of the formula I, characterised in that it has the following structure :

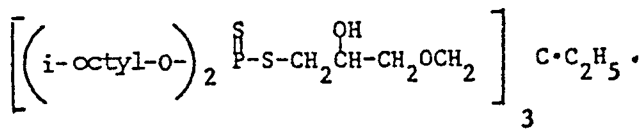

4. A product obtained by an addition reaction of a dithiophosphoric acid-O,O-dialkyl ester with an epoxidised soybean oil at 50° to 100 °C.

5. A product according to claim 4, characterised in that the dithiophosphoric acid-O,O-dialkyl ester is the dithiophosphoric acid-O,O-di-2-ethylhexyl ester.

6. Process for the production of compounds according to claim 1 of the formula I, characterised in that a dithiophosphoric acid-O,O-dialkyl ester of the formula II

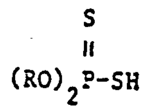 (II)

and an epoxy compound of the formula III

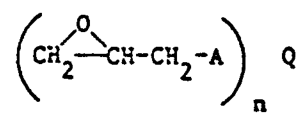 (III)

are subjected, optionally in an inert organic solvent, to an addition reaction at 50° to 100 °C, the quantity ratio being such that to 1 mol of the compound of the formula III there are n mols of the compound of the formula II, and that the solvent can if required be afterwards removed.

7. Process according to claim 6, characterised in that the addition reaction is performed in an inert organic solvent.

8. Process for the production of compounds according to claim 4, characterised in that a dithiophosphoric acid-O,O-dialkyl ester is subjected, optionally in an inert organic solvent, to an addition reaction with an epoxidised soybean oil at a reaction temperature of 50° to 100 °C, the quantity ratio being such that the —SH groups and the epoxide groups are present in stoichiometric amounts.

9. Composition of matter consisting of a mineral lubricating oil and/or synthetic lubricating oil and a compound of the formula I according to claim 1, or several of such compounds.

10. Use of the compounds of the formula I according to claim 1 as lubricant additives.

11. Compositions of matter consisting of a mineral lubricating oil and/or synthetic lubricating oil and a product according to claim 4.

12. Use of the product according to claim 4 as a lubricant additive.

**Revendications**

1. Composés répondant à la formule I

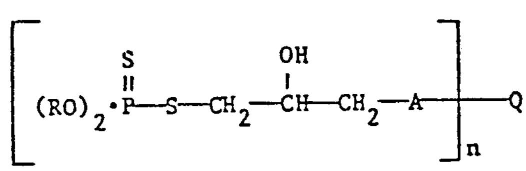 (I)

dans laquelle n désigne un nombre égal à 2, à 3 ou à 4 et représente la valence de Q, R représente un radical alkyle en $C_1$-$C_{18}$ linéaire ou ramifié, non interrompu ou interrompu par des atomes O ou S, un radical cycloalkyle en $C_5$-$C_8$ non substitué ou porteur d'un ou deux alkyles en $C_1$-$C_{12}$, ou un radical phényle ou benzyle non substitué ou porteur d'un ou deux alkyles en $C_1$-$C_{18}$, A représente un radical —O.CO—, —O— ou —[OCH($R^1$)$CH_2$]—$_m$ (où m est un nombre de 0 à 30 et $R^1$ représente l'hydrogène ou un méthyle), et Q représente :
dans le cas où A désigne —O.CO—, l'un des radicaux :

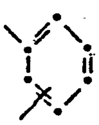 , 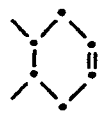 et 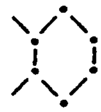

dans le cas où A désigne —O—, l'un des radicaux :

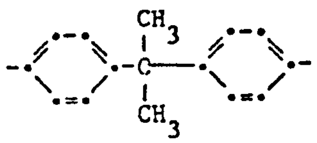 , 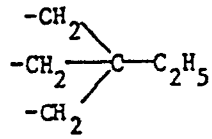 , 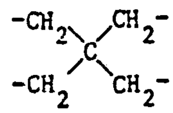

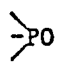 et 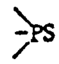

et dans le cas où A désigne —[OCH($R^1$)$CH_2$]—$_m$, un radical hétérocyclique (E) appartenant à l'ensemble des radicaux provenant de l'hydantoïne, de l'uracile, du dihydro-uracile, de l'acide barbiturique ou de l'éthylène-urée, les radicaux (E) pouvant également être substitués, et A et Q pouvant être reliés par des hétéroatomes N.

2. Composés de formule I selon la revendication 1, dans lesquels R représente un radical alkyle contenant de 3 à 8 atomes de carbone, plus particulièrement un radical isopropyle ou iso-octyle.

3. Composé de formule I selon la revendication 1, en l'espèce celui qui répond à la formule suivante ;

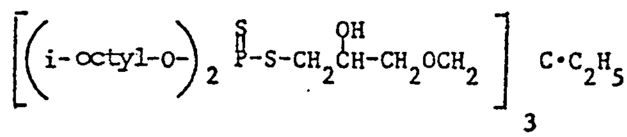

4. Produit qui a été obtenu par une réaction d'addition effectuée à une température de 50 à 100 °C entre un dithiophosphate d'O,O-dialkyle et une huile de soja époxydée.

5. Produit selon la revendication 4, caractérisé en ce que le dithiphosphate d'O,O-dialkyle est le dithiophosphate d'O,O-di-(éthyl-2 hexyle).

6. Procédé de préparation de composés de formule I selon la revendication 1, procédé caractérisé en ce qu'on soumet à une réaction d'addition, à une température comprise entre 50 et 100 °C, un dithiophosphate d'O,O-dialkyle de formule II :

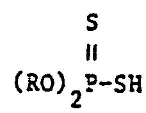 (II)

et un composé époxydique de formule III :

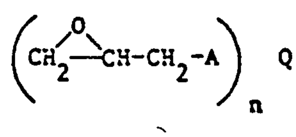 (III)

éventuellement dans un solvant organique inerte, ces partenaires réactionnels étant mis en jeu en des quantités relatives telles qu'il y est, pour 1 mole du composé de formule III, n moles du composé de formule II, après quoi on élimine éventuellement le solvant.

7. Procédé selon la revendication 6, caractérisé en ce que la réaction d'addition est exécutée dans un solvant organique inerte.

8. Procédé de préparation de composés selon la revendication 4, caractérisé en ce qu'on soumet à une réaction d'addition, à une température de 50 à 100 °C, un dithiophosphate d'O,O-dialkyle et une huile de soja époxydée, éventuellement dans un solvant organique inerte, ces partenaires réactionnels étant mis en jeu en des quantités relatives telles que les radicaux —SH et les radicaux époxy soient dans le rapport stœchiométrique.

9. Compositions constituées d'une huile lubrifiante minérale et/ou synthétique et d'un composé de formule I selon la revendication 1, ou de plusieurs de ces composés.

10. Application des composés de formule I selon la revendication 1 comme additifs pour lubrifiants.

11. Compositions constituées d'une huile lubrifiante minérale et/ou synthétique et d'un produit selon la revendication 4.

12. Application du produit selon la revendication 4 comme additif pour lubrifiants.